(19) Europäisches Patentamt / European Patent Office / Office européen des brevets

(11) **EP 2 853 769 A1**

(12) **DEMANDE DE BREVET EUROPEEN**

(43) Date de publication:
01.04.2015 Bulletin 2015/14

(51) Int Cl.:
*F16F 15/00* (2006.01)     *F16H 7/02* (2006.01)
*B60W 10/30* (2006.01)     *F02B 67/06* (2006.01)

(21) Numéro de dépôt: **14184121.3**

(22) Date de dépôt: **09.09.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **30.09.2013 FR 1359382**

(71) Demandeur: **PEUGEOT CITROËN AUTOMOBILES SA**
**78140 Velizy-Villacoublay (FR)**

(72) Inventeurs:
• **Balenghien, Olivier**
  **93340 Le Raincy (FR)**
• **Magnin, Marie**
  **75020 Paris (FR)**

(54) **Véhicule automobile agence pour reduire des excitations vibratoires d'un compresseur de climatisation**

(57)   L'invention porte sur un véhicule automobile équipé d'un moteur à combustion thermique constitutif d'un groupe motopropulseur porté par des cales de suspension. Le moteur à combustion interne est pourvu d'une première poulie associée à un vilebrequin et d'une deuxième poulie associée à un compresseur équipant une boucle de climatisation. La première poulie et la deuxième poulie comportent un rapport de démultiplication D. Le moteur à combustion interne comporte un régime de ralenti R. Le groupe motopropulseur comporte une fréquence maximale F de vibration sur les cales de suspension. Le rapport de démultiplication D vérifie l'inéquation [1] suivante :

$$(Cs \times F \times 60) / R < D \qquad [1]$$

dans laquelle Cs correspond à un coefficient de sécurité.

Fig.1

## Description

L'invention porte sur un véhicule automobile équipé d'un moteur à combustion thermique constitutif d'un groupe motopropulseur porté par des cales de suspension, le moteur à combustion interne étant pourvu d'une première poulie associée à un vilebrequin et d'une deuxième poulie associée à un compresseur équipant une boucle de climatisation.

Le document EP0956985 décrit un procédé et un dispositif pour supprimer une résonance d'un tuyau sous pression lorsqu'un fluide sous pression s'écoule depuis une zone de mise sous pression de façon intermittente le long d'un passage de fluide que comprend le tuyau. Le procédé est caractérisé par la fourniture d'un corps de soupape mobile situé dans le passage du fluide, dans lequel le corps de soupape peut être déplacé par l'écoulement du fluide sous pression, par la limitation du mouvement du corps de soupape par une force de limitation prédéterminée et par la détermination de la force de limitation de sorte que la fréquence de variation de pression de fluide sous pression s'écoulant dans le tuyau change de façon à être sensiblement différente de la fréquence naturelle du tuyau ou de sorte que l'amplitude de la variation de pression de fluide sous pression s'écoulant dans le tuyau soit réduite.

Le tuyau est un tuyau participant d'une boucle de climatisation qui est prévue pour modifier une température d'un flux d'air préalablement à une admission de ce dernier à l'intérieur d'un habitacle du véhicule automobile. La boucle de climatisation comprend un compresseur pour comprimer le fluide sous pression.

Un inconvénient d'un tel compresseur réside dans une aptitude de ce dernier à générer des excitations vibratoires qui sont transmises à l'intérieur de l'habitacle et qui génèrent une gêne vibratoire et/ou acoustique pour un utilisateur présent à l'intérieur de l'habitacle. De plus, la boucle de climatisation est susceptible de fonctionner en mode pompe à chaleur lorsqu'une température extérieure est par exemple inférieure à -20°C et en mode climatisation lorsque la température extérieure est supérieure à 20°C, il en résulte qu'une fréquence de gêne vibratoire et/ou acoustique est excessive, notamment lorsque le compresseur fonctionne à pleine puissance. Il en ressort finalement qu'un agencement d'un tel véhicule automobile mérite d'être amélioré.

Un but de la présente invention est de proposer un véhicule automobile qui est agencé pour limiter une gêne acoustique et/ou vibratoire pour un utilisateur présent à l'intérieur d'un habitacle du véhicule automobile, une telle gêne étant limitée quelle que soit la température extérieure au véhicule automobile et quel que soit la puissance générée par un compresseur constitutif d'une boucle de climatisation équipant le véhicule automobile.

Un véhicule automobile de la présente invention est un véhicule automobile équipé d'un moteur à combustion thermique constitutif d'un groupe motopropulseur porté par des cales de suspension, le moteur à combustion interne étant pourvu d'une première poulie associée à un vilebrequin et d'une deuxième poulie associée à un compresseur équipant une boucle de climatisation, la première poulie et la deuxième poulie comportant un rapport de démultiplication D, le moteur à combustion interne comportant un régime de ralenti R, le groupe motopropulseur comportant une fréquence maximale F de vibration sur les cales de suspension.

Selon la présente invention, le rapport de démultiplication D vérifie l'inéquation [1] suivante :

$$(Cs \times F \times 60) / R < D \qquad [1]$$

dans laquelle Cs correspond à un coefficient de sécurité.

Le compresseur générant une excitation vibratoire comportant une harmonique de rang N correspondant à un nombre de pistons du compresseur, le rapport de démultiplication D vérifie préférentiellement l'inéquation [2] suivante :

$$(Cs \times F \times 60) / (R \times N) < D \qquad [2]$$

Le coefficient de sécurité Cs est de préférence supérieur à 1,15. Un bon compromis est obtenu pour un coefficient de sécurité Cs de 1,25.

Les cales de suspension sont préférentiellement interposées entre le groupe motopropulseur et la caisse du véhicule automobile.

Un procédé de mise en oeuvre d'un véhicule automobile de la présente invention est principalement reconnaissable en ce que le procédé comprend une première étape d'identification de modes de vibration du groupe motopropulseur sur les dites cales de suspension.

Le procédé comprend avantageusement une deuxième étape de détermination de la fréquence la plus élevée des modes de vibration du groupe motopropulseur.

Le procédé comprend avantageusement une troisième étape de calcul d'un meilleur compris entre le rapport de démultiplication D et le régime de ralenti R pour satisfaire l'inéquation [1].

Le procédé comprend avantageusement une quatrième étape de limitation d'une puissance du compresseur. Avantageusement, la puissance du compresseur est limitée à 75% de sa puissance maximale.

D'autres caractéristiques et avantages de la présente invention apparaîtront à la lecture de la description qui va en être faite d'exemples de réalisation, en relation avec les figures de la planche annexée, dans laquelle :

La figure 1 est une courbe représentant l'intensité d'une excitation vibratoire d'un compresseur constitutif d'un véhicule automobile de la présente invention.

La figure 2 est une courbe représentant les modes vibratoires d'un groupe motopropulseur équipant un véhicule automobile de la présente invention.

La figure 3 est un diagramme représentant une intensité de chaque mode vibratoire en fonction de sa fréquence.

Un véhicule automobile est couramment équipé d'un moteur à combustion interne pour pourvoir à son déplacement. Le moteur à combustion interne est susceptible de tourner à un régime de ralenti R. Le moteur à combustion interne est équipé d'un vilebrequin pour convertir un mouvement rectiligne alternatif en mouvement circulaire. Le vilebrequin est en relation avec une première poulie d'accessoires-vilebrequin. Le moteur à combustion interne est constitutif d'un groupe motopropulseur qui est logé à l'intérieur du compartiment moteur. Le groupe motopropulseur repose sur la caisse du véhicule automobile, autrement dit sur le squelette de la voiture, par l'intermédiaire de cales de suspension.

Le véhicule automobile est couramment aussi équipé d'une boucle de climatisation pour modifier une température d'un flux d'air préalablement à une délivrance de ce dernier à l'intérieur d'un habitacle du véhicule automobile. La boucle de climatisation est susceptible de fonctionner en mode pompe à chaleur lorsqu'une température extérieure est par exemple inférieure à -20°C, et en mode climatisation, lorsque la température extérieure est supérieure à 20°C. La boucle de climatisation est notamment équipée d'un compresseur pour comprimer un fluide réfrigérant circulant à l'intérieur de la boucle de climatisation. La boucle de climatisation comprend aussi un organe de détente à l'intérieur duquel le fluide réfrigérant subit une détente. La boucle de climatisation comprend enfin un aérotherme et un échangeur de chaleur pour échanger de la chaleur avec un milieu environnant respectif.

Le compresseur comprend des pièces qui sont mises en rotation pour comprimer le fluide réfrigérant. Le compresseur est en relation avec une deuxième poulie qui est en relation mécanique avec un arbre associé au moteur à combustion interne. La mise en rotation du compresseur engendre une excitation vibratoire qui est susceptible d'être transmise à la caisse du véhicule automobile, notamment par l'intermédiaire des cales de suspension interposées entre le groupe motopropulseur et la caisse. Plus particulièrement, le groupe motopropulseur comporte une fréquence maximale F de vibration sur les cales de suspension. Une telle transmission d'excitations vibratoires est susceptible de provoquer des nuisances vibratoires et/ou sonores à l'intérieur de l'habitacle du véhicule automobile.

Dans sa généralité, la présente invention propose de positionner ladite excitation vibratoire de manière à ce que cette dernière soit distincte d'amplifications de modes vibratoires du groupe motopropulseur sur les dites cales de suspension. Autrement dit, il est proposé de démultiplier une vitesse de rotation entre la première poulie associée au vilebrequin du moteur à combustion interne et la deuxième poulie associée au compresseur.

Plus particulièrement, dans le cas où la première poulie et la deuxième poulie comportent un rapport de démultiplication D, le rapport de démultiplication D vérifie l'inéquation [1] suivante :

$$(Cs \times F \times 60) / R < D \qquad [1]$$

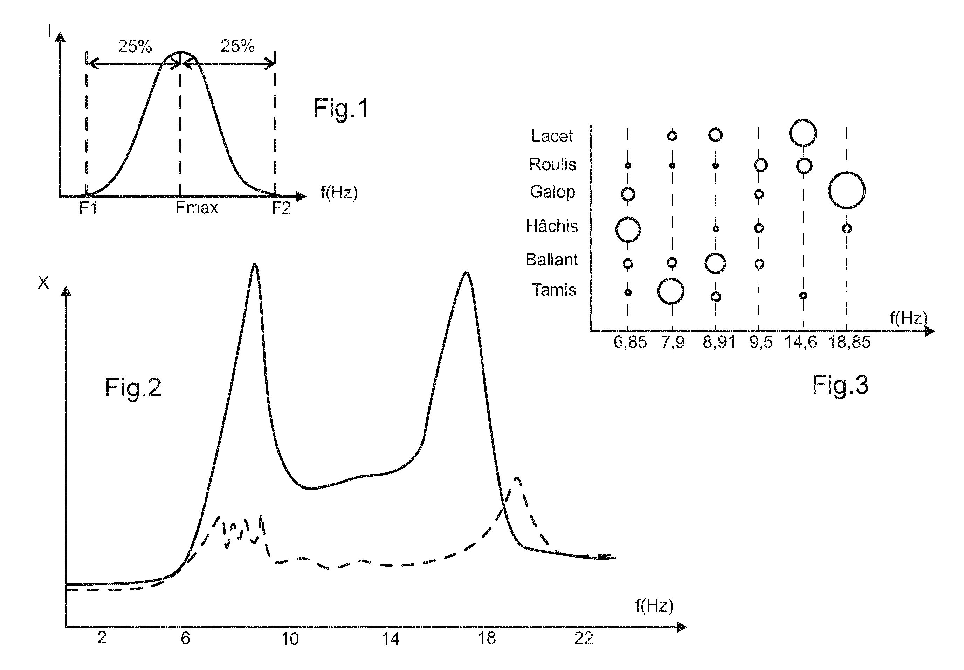

Dans laquelle Cs correspond à un coefficient de sécurité. Le coefficient 60 correspond à la conversion de la fréquence F exprimée en hertz en tours par minute, le régime de ralenti R étant exprimé en tours/minutes. Le coefficient de sécurité Cs évite une transmission d'énergie vibratoire portée par les fréquences situées sous la courbe de la figure 2 qui est encadrée par des fréquences minimale $F_1$ et maximale $F_2$, respectivement inférieure de 25% et supérieur de 25%, par rapport à une fréquence maximale $F_{max}$, pour laquelle l'intensité est maximale tel qu'illustré sur la figure 1. Un résultat optimum est obtenu pour un coefficient de sécurité de 1,25, soit +/- 25% de la fréquence maximum, comme dans la figure 1, cependant, le coefficient de sécurité Cs peut être moindre mais de préférence supérieur à 1,15, soit +/-15% de la fréquence maximum pour limiter la transmission d'énergie vibratoire.

Plus particulièrement encore, dans le cas où le compresseur génère une excitation vibratoire comportant une harmonique de rang N correspondant à un nombre de pistons du compresseur, le rapport de démultiplication D vérifie l'inéquation [2] suivante :

$$(Cs \times F \times 60) / (R \times N) < D \qquad [2]$$

Dans laquelle, le coefficient Cs correspond au coefficient de sécurité déjà décrit, le coefficient 60 correspond à la conversion de la fréquence F exprimée en Hertz en tours/minutes, le régime de ralenti R étant exprimé en tours/minutes et l'harmonique de rang N étant un nombre entier strictement supérieur à zéro.

La présente invention propose également un procédé de mise en oeuvre d'un tel véhicule automobile qui comporte une première étape d'identification des modes de vibration du groupe motopropulseur sur les dites cales de suspension, tels que représentés sur la figure 2.

La première étape est suivie d'une deuxième étape de détermination de la fréquence la plus élevée des modes de vibration du groupe motopropulseur. Sur la figure 3 où est représenté chaque mode de vibration en fonction de la fréquence, le diamètre de chaque cercle étant fonction de l'intensité vibratoire identifiée, il est notable sur l'exemple illustré que le mode galop recouvre l'intensité vibratoire la plus importante pour une fréquence de 18,85 Hz.

La deuxième étape est alors suivie d'une troisième étape de calcul d'un meilleur compris entre le rapport de démultiplication D et le régime de ralenti R pour satisfaire selon le cas aux inéquations [1] et [2] susvisées.

Dans le cas où les inéquations [1] et [2] susvisées ne sont pas satisfaites, notamment en raison des contraintes mécaniques du compresseur, le procédé comprend une quatrième étape de limitation d'une puissance du compresseur. Le niveau de limitation dépend de l'architecture du compresseur et de la puissance du compresseur. Une limitation à environ 75% de la puissance maximale du compresseur est un bon compromis permettant de conserver la fonction de climatisation.

## Revendications

1. Véhicule automobile équipé d'un moteur à combustion thermique constitutif d'un groupe motopropulseur porté par des cales de suspension, le moteur à combustion interne étant pourvu d'une première poulie associée à un vilebrequin et d'une deuxième poulie associée à un compresseur équipant une boucle de climatisation, la première poulie et la deuxième poulie comportant un rapport de démultiplication D, le moteur à combustion interne comportant un régime de ralenti R, le groupe motopropulseur comportant une fréquence maximale F de vibration sur les cales de suspension, **caractérisé en ce que** le rapport de démultiplication D vérifie l'inéquation [1] suivante :

$$(Cs \times F \times 60) / R < D \qquad [1]$$

dans laquelle Cs correspond à un coefficient de sécurité.

2. Véhicule automobile selon la revendication 1, le compresseur générant une excitation vibratoire comportant une harmonique de rang N correspondant à un nombre de pistons du compresseur, **caractérisé en ce que** le rapport de démultiplication D vérifie l'inéquation [2] suivante :

$$(Cs \times F \times 60) / (R \times N) < D \qquad [2]$$

3. Véhicule selon la revendication 1, **caractérisé en ce que** le coefficient de sécurité Cs supérieur à 1,15.

4. Véhicule selon la revendication 2, **caractérisé en ce que** le coefficient de sécurité Cs est de 1,25.

5. Véhicule automobile selon l'une quelconque des revendications précédentes, **caractérisé en ce que** les cales de suspension sont interposées entre le groupe motopropulseur et la caisse du véhicule automobile.

6. Procédé de mise en oeuvre d'un véhicule automobile selon l'une quelconque des revendications précédentes, **caractérisé en ce que** le procédé comprend une première étape d'identification de modes de vibration du groupe motopropulseur sur les dites cales de suspension.

7. Procédé selon la revendication 6, **caractérisé en ce que** le procédé comprend une deuxième étape de détermination de la fréquence la plus élevée des modes de vibration du groupe motopropulseur.

8. Procédé selon la revendication 7, **caractérisé en ce que** le procédé comprend une troisième étape de calcul d'un meilleur compris entre le rapport de démultiplication D et le régime de ralenti R pour satisfaire l'inéquation [1].

9. Procédé selon la revendication 8, **caractérisé en ce que** le procédé comprend une quatrième étape de limitation d'une puissance du compresseur.

10. Procédé selon la revendication 9, **caractérisé en ce que** la puissance du compresseur est limitée à 75% de sa puissance maximale.

25%    25%

Fig.1

F1    Fmax    F2

f(Hz)

I

X

Fig.2

f(Hz)

2    6    10    14    18    22

Lacet
Roulis
Galop
Hâchis
Ballant
Tamis

f(Hz)

6,85    7,9    8,91    9,5    14,6    18,85

Fig.3

EP 2 853 769 A1

Europäisches
Patentamt

European
Patent Office

Office européen
des brevets

**RAPPORT DE RECHERCHE EUROPEENNE**

Numéro de la demande

EP 14 18 4121

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2006/223662 A1 (IHATA KOUICHI [JP] ET AL) 5 octobre 2006 (2006-10-05) * alinéa [0020] - alinéa [0032]; figures 2,10,11 * | 1-7 | INV. F16F15/00 F16H7/02 |
| X | WO 2007/074016 A1 (SCHAEFFLER KG [DE]; RASCHE THOMAS [DE]) 5 juillet 2007 (2007-07-05) * le document en entier * | 1,2,5,6 | ADD. B60W10/30 F02B67/06 |
| A | US 2002/011229 A1 (ASAHARA YASUYUKI [JP]) 31 janvier 2002 (2002-01-31) * alinéa [0075] - alinéa [0083]; figures 1,6,9,11,15,17,22,23,24 * | 1-10 | |
| A | EP 1 624 549 A2 (DENSO CORP [JP]) 8 février 2006 (2006-02-08) * alinéa [0031] - alinéa [0045]; figure 1 * | 1 | |

DOMAINES TECHNIQUES
RECHERCHES (IPC)

F16F
B60W
F02B
F16H

Le présent rapport a été établi pour toutes les revendications

| Lieu de la recherche | Date d'achèvement de la recherche | Examinateur |
|---|---|---|
| Munich | 30 septembre 2014 | Tietje, Kai |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

......................................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**       EP 14 18 4121

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-09-2014

| Document brevet cité au rapport de recherche | | Date de publication | Membre(s) de la famille de brevet(s) | | Date de publication |
|---|---|---|---|---|---|
| US 2006223662 | A1 | 05-10-2006 | JP | 4356638 B2 | 04-11-2009 |
| | | | JP | 2006288000 A | 19-10-2006 |
| | | | US | 2006223662 A1 | 05-10-2006 |
| WO 2007074016 | A1 | 05-07-2007 | CN | 101346567 A | 14-01-2009 |
| | | | DE | 102005062318 A1 | 12-07-2007 |
| | | | EP | 1969255 A1 | 17-09-2008 |
| | | | KR | 20080080993 A | 05-09-2008 |
| | | | US | 2009305828 A1 | 10-12-2009 |
| | | | WO | 2007074016 A1 | 05-07-2007 |
| US 2002011229 | A1 | 31-01-2002 | AUCUN | | |
| EP 1624549 | A2 | 08-02-2006 | EP | 1624549 A2 | 08-02-2006 |
| | | | JP | 4363277 B2 | 11-11-2009 |
| | | | JP | 2006046571 A | 16-02-2006 |
| | | | US | 2006035736 A1 | 16-02-2006 |

EPO FORM P0460

Pour tout renseignement concernant cette annexe : voir Journal Officiel de l'Office européen des brevets, No.12/82

**EP 2 853 769 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0956985 A